# EUROPEAN PATENT APPLICATION

(11) **EP 3 141 855 A1**
(43) Date of publication of application: **15.03.2017**
(21) Application number: 16001963.4
(22) Date of filing: 09.09.2016
(51) Int. Cl.: F27D 19/00, F27D 21/00, C21D 11/00

(54) **SYSTEM AND METHOD FOR FACILITATING THE MAINTENANCE OF AN INDUSTRIAL FURNACE**

(30) Priority: 11.09.2015 US 201562217230 P
(71) Applicant: Ipsen International GmbH, 47533 Kleve (DE)
(72) Inventor: Somary, Geoffrey, Arlington Heights, Illinois 60004 (US); Moller, Craig A., Roscoe, Illinois 61073 (US); Grann, Jim, Rockton, Illinois 61072 (US); Goldsteinas, Aymeric, Rockton, Illinois 61072 (US)

(57) **Abstract**

A system and method for facilitating the maintenance of an industrial heat treating furnace are disclosed.

## Description

### Field of the Invention

The present invention relates generally to a system and method for facilitating the maintenance of an industrial heat treating furnace and more particularly, but not exclusively, to a system and method for automatically determining whether an industrial furnace requires or will require maintenance due to a failure condition in one or more furnace components.

### background of the Invention

In the world of heat treatment, furnaces must often withstand extreme conditions. However, for consistent, high-quality results, the furnace should be kept in excellent condition. While there are various ways to perform maintenance, there are still occasions where the furnace may break down, resulting in lost production and furnace downtime.

Accordingly, there is a need in the field for systems and methods that maintain industrial furnaces and both indicate when furnace maintenance is required and predict when furnace maintenance will be required to ensure continued operation of the furnace.

Vacuum and atmospheric furnaces are complex systems for heat treatment of various materials, such as, for example, metallic materials. During the heat treatment process, there are various important factors that determine the outcome. In a vacuum furnace, these factors include the pressure, temperature, and a defined atmosphere. Furnaces may also include controlled cooling processes or quenching processes. For these parameters to be precisely controllable, the relevant furnace components have to work accurately and without failure. The various systems of the vacuum furnace (e.g., heating, vacuum, pumping, and cooling systems), therefore, must be kept in good condition. Accordingly, the present invention provides systems and methods for maintaining the condition of a furnace and identifying or predicting failure conditions associated with the various systems and components of the furnace.

### Summary of the Invention

Regarding the present system and methods of the invention broadly, the system includes a connected furnace that may communicate with a local terminal or dashboard that provides a display where a furnace user may monitor the health and status of the various furnace components. A benefit of the invention is that the local terminal may be placed at a monitored furnace and does not require a connection to the furnace's programmable logic controller (PLC) or proprietary control interface.

During operation, the local terminal may communicate with a remote server that may allow third parties, such as field service technicians, to also monitor the health and status of the various furnace components and check sensors at the furnace to: provide error detection, check or scan for current faults and errors, perform diagnostic service and repair, and provide preventative and proactive maintenance, as needed. The local terminal may also communicate with a remote server to allow certain third parties to monitor furnace performance and maintenance data for all furnaces that may be connected to the remote server of the system. Here and throughout the Specification and Claims the term "local terminal" means a computing device that is located on or adjacent to the furnace to which it is connected. Here and throughout the Specification and Claims the term "remote server" means a computing device connected to the internet or other network and which may be located in the same facility as a furnace to which it is connected or in a facility that is remote from the facility where the connected furnace is located. The remote server may be embodied as a physical server or it may be cloud based.

In one aspect, the invention includes a system for aiding in the maintenance of an industrial heat treating furnace. The system may include a plurality of sensors connected to a corresponding plurality of furnace components. Each of the sensors may be configured to sense a parameter associated with operation of one of the furnace components. The sensors may also be configured or programmed to generate a signal that may be representative of the sensed furnace parameter.

The system may include a computing system, processor, or a group of processors that may be connected to communicate with and receive the signals from the plurality of sensors. The computing system may be programmed to: (1) convert the signals from the sensors into a plurality of data elements; (2) select representative data elements from each of the plurality of data elements where the representative data elements may be indicative of the parameter sensed by one of the sensors; (3) analyze the representative data elements using a predictive processing methodology, to determine whether one or more of the furnace components requires maintenance or will require maintenance; and then (4) display information indicative of a status of one or more of the furnace components based on the analysis of the representative data elements.

The predictive processing methodologies of the invention may include one or more of a trend process, a rate of change process, and a predetermined value comparison process.

The trend process may include comparing the representative data elements over a period of time and determining whether the representative data elements define a trend that indicates a failure condition associated with one or more of the furnace components as compared to a reference trend. The rate of change process may include comparing the representative data elements over a period of time and determining whether a rate at which the representative data elements change in value indicates a failure condition associated with one or more of the furnace components as compared to a reference rate of change. The predetermined value comparison process may include comparing the representative data elements to one or more predetermined values indicative of a failure condition and determining whether the representative value indicates a failure condition associated with one or more of the furnace components as compared to the one or more predetermined values.

In another aspect, the invention includes a method for automatically determining whether (1) a component of a furnace requires maintenance because of a present failure condition; and/or (2) a component of the furnace will require maintenance because of an expected failure condition.

The method may include sensing parameters associated with operation of furnace components with a plurality of sensors connected to a corresponding plurality of furnace components. After sensing, the method may include generating signals that may be representative of the sensed parameters with the plurality of sensors. The method may further include receiving the signals from each sensor at a computer system. The computer system may be associated with the furnace and may be programmed to perform the following steps;
i. converting the signals from each sensor into a plurality of data elements;
ii. selecting representative data elements from each of the plurality of data elements, the representative data elements being indicative of a parameter associated with operation of one or more of the furnace components; and
iii. analyzing the representative data elements by a predictive maintenance process or routine selected from the group consisting of a trend process, a rate of change process, a predetermined value comparison process, and a combination thereof.

After processing and analysis, the method may include displaying information indicative of a status (e.g,, a failure status or maintenance status) of one or more of the furnace components based on the analysis of the representative data elements.

Predictive maintenance, as provided by the systems and methods of the invention, is based on monitoring in-service equipment and determining when maintenance should be performed. The system and methods of the invention prevents equipment failures before they occur and may schedule maintenance, as needed.

The benefits of the present invention are numerous. The system may provide (1) a real time dashboard for monitoring furnace representative data; (2) an optional cloud based server for monitoring furnace representative data; (3) the ability to monitor a number of furnaces connected via local terminals to a single remote server; (4) the ability to operate the system through a local terminal independently should a connection to the remote server fail; and (5) the ability to monitor and maintain a connected furnace from a remote server automatically in order to maintain the longevity of the furnace for an end user.

### Brief Description of the Drawings

The foregoing summary and the following detailed description of the exemplary embodiments of the present invention may be further understood when read in conjunction with the appended drawings, in which:
Fig. 1 schematically illustrates an exemplary furnace maintenance system 1 of the invention.
Fig. 2 schematically illustrates an additional exemplary furnace maintenance system 2 of the invention.
Fig. 3 schematically illustrates an exemplary furnace maintenance system 3 of the invention that demonstrates a deployment of various furnace sensors on a vacuum furnace.
Fig. 4 schematically illustrates an exemplary method 1000 of maintaining a furnace.
Fig. 5 schematically illustrates an exemplary trend process 1080 for analyzing data elements that are representative of a furnace parameter.
Fig. 6 schematically illustrates an exemplary rate of change process 1090 for analyzing data elements that are representative of a furnace parameter.
Fig. 7 schematically illustrates an exemplary comparison process 1100 for analyzing data elements that are representative of a furnace parameter.

### Detailed Description of the Invention

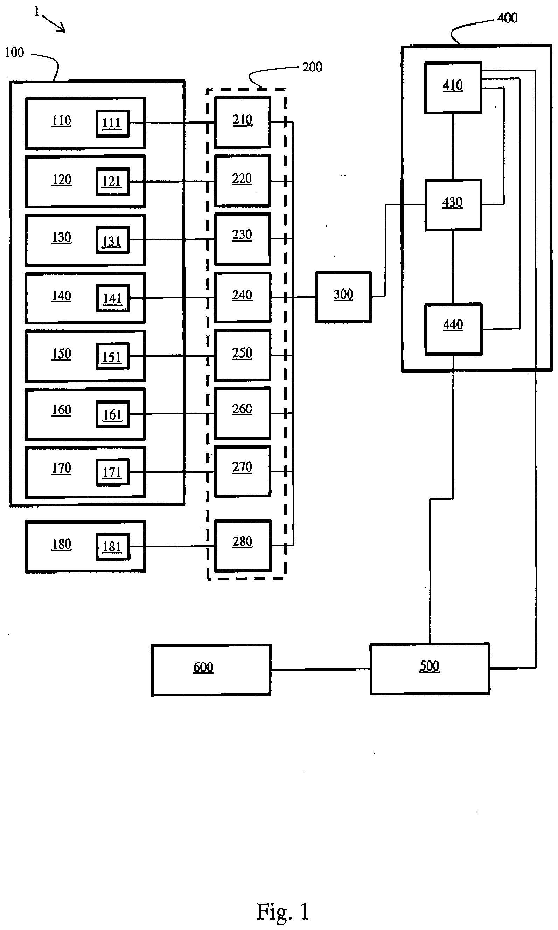

Referring now to the figures, wherein like elements are numbered alike throughout, Fig. 1 provides an exemplary system **1** for maintaining or otherwise aiding in the maintenance of an industrial heat treating furnace **100**

Industrial heat treating furnaces are generally defined as either (1) positive pressure or atmospheric furnaces which operate at about standard atmospheric pressure; or (2) vacuum furnaces, which heat a material under a vacuum. Certain heat treatment processes dictate the use of a vacuum during some period of a heating cycle. As used herein, "vacuum furnace" means a furnace that applies a vacuum in the furnace chamber during any portion of a heat treating cycle. For example, if a vacuum is used only to purge the furnace chamber prior to performing a heating and cooling heat treating process at positive pressure, the furnace is a vacuum furnace. In certain preferred aspects, the furnace **100** is a vacuum furnace.

Various exemplary furnaces are known in the art and include those furnaces and related components described in U.S. Patent Nos. 8,747,731, 5,883,361, 5,930,285, 5,965,050, 8,313,586, 8,333,852, 8,662,888, 8,246,901, 8,465,603, 8,280,531, 8,175,744, 7,559,995, 6,794,618, 4,610,435, 4,251,809, 4,559,631, 4,368,037, 4,906,182, 4,560,348, 4,608,698, 4,612,651, 5,502,742, and 7,255,829; and U.S. Patent Application Publication Nos. 20150072297, 20140106287, 20120276494, 20120247627, 20130175741, 20130177860, 20140090754, and 20130175256. Vacuum furnaces, and components related to the operation of vacuum furnaces, are also known in the art as described in U.S. Patent Nos. 4,212,633, 4,225,744, 4,227,032, 4,245,943, 4,246,434, 4,247,734, 5,059,757, 5,567,381, 5,709,544, 6,533,991, 6,749,800, 6,756,566, 6,903,306, 6,910,614, 7,105,126, 8,992,213, 8,694,167; and U.S. Patent Application Publication Nos. 20130175251, 20130175256, 20130209947, and 20150049781. Each U.S. Patent and U.S. Patent Application Publication is incorporated by reference herein.

Furnace **100** may include a variety of furnace systems and components used to operate the furnace **100.** Furnace **100** may include a gas system **110,** a control system **120,** a cooling system **130,** a hot zone **140,** a vacuum integrity system **150,** a pumping system **160,** a transport system **170,** or a combination thereof. In addition, the system of the invention may include an atmospheric monitoring system **180** that may be encompassed within the furnace **100** or may be proximate to the furnace **100.** For example, the atmospheric monitoring system **180** may be mounted directly to the furnace **100** or may be placed in the vicinity of the furnace **100** (e.g., the same room as the furnace) in order to monitor the atmospheric or ambient conditions surrounding the furnace **100.**

Each of the foregoing systems of the furnace **100** may further include one or more corresponding system components (e.g., components **111, 121, 131, 141, 151, 161, 171,** and **181**)**.**

Referring to exemplary components of the system **1,** the furnace **100** may include a gas system **110.** The gas system **110** may be provided at the furnace **100** to measure properties of gas remaining inside the furnace during operation. In addition, gas system **110** may include a system for depositing gas into a portion of the furnace, such as the hot zone **140.** Indeed, the gas system **110** may include a mechanism for injecting an inert gas into the hot zone **140.** The gas system **110** may include a gas system component **111,** which may be a device for measuring a dew point in the gas of the furnace. Dew point is measured and monitored in vacuum furnaces, for instance, to prevent discoloration of a part during heat treatment.

The furnace **100** may include a control system **120** that is located at the furnace **100** and communicates with the various systems and components located at the vacuum furnace that may be electronically manipulated (e.g., modulated, activated, or deactivated). For instance, the control system **120** may include various components **121,** such as circuitry that allows a user to initiate electrical activation of the furnace, temperature adjustment, and/or pump initiation. The control system **120** may also include a transceiver for receiving instructions from a transmitter and locally controlling components of the furnace **100** according to such instructions. In addition, the control system **120** may include circuitry to locally power down or deactivate the furnace **100.**

In certain embodiments, the control system components **121** of the control system **120** may include a control processor, deactivation/activation circuitry, a cold cathode, and a controller thermometer, for example.

The terms "processor" and "microprocessor" as used herein are broad terms and, unless more specifically indicated, are to be given their ordinary and customary meaning to a person of ordinary skill in the art, and furthermore refer without limitation to a computer system, state machine, and the like that performs arithmetic and logic operations using logic circuitry that respond to and process the basic instructions that drive a computer, The system of the invention may also include data storage devices that include non-transitory media, such as floppy disks and diskettes, compact disk (CD)-ROMs (whether or not writeable), DVD digital disks, RAM and ROM memories, computer hard drives and back-up drives, external hard drives, "thumb" drives, and any other storage medium readable by a computer for the storage of electronic data, in any form, as described herein.

The furnace **100** may include a cooling system **130** that includes various components **131** for cooling portions of the furnace 100 before, during, and/or after a heat treatment cycle. For example, the cooling system 130 may be connected to and in fluid communication with the hot zone **140** and any exterior or interior surface of the hot zone **140.** The cooling system **130** may include a cooling system component **131** such as a blower (e.g., a fan) and a heat exchanger. The blowers utilized in the furnaces of the invention may include a motor and one or more seals and bearings.

The furnace **100** may include a hot zone **140,** which may be described as a compartment of the furnace **100** where the heating takes place and which may include various hot zone components **141** such as thermal insulation and a heating element.

The furnace **100** may include a vacuum integrity system **150,** which may be described as a system employed by vacuum furnaces to maintain a vacuum created within the furnace **100** at a pressure vessel during heat treatment where the pressure vessel may contain the hot zone **140.** Accordingly, the vacuum integrity system **150** may include vacuum integrity system components **151** such as a pressure vessel that may enclose the hot zone **140** during heat treatment and one or more seals (e.g., O-ring seals) employed at a door of the furnace **100** or pressure vessel to prevent fluid (e.g., gas) from entering or escaping the pressure vessel and/or the hot zone **140.**

The furnace **100** may include a pumping system **160** connected to and in fluid communication with a pressure vessel and the hot zone **140** and may include a pumping system component **161** such as one or more pumps for evacuating gas from the pressure vessel and/or the hot zone **140** when operating a vacuum furnace. The pumping system component **161** may include a roughing pump, a booster pump, a holding pump, and/or a diffusion pump.

Furnace **100** may be a continuous furnace or a batch furnace. The furnace **100** may be a continuous furnace that includes a transport system **170** that may be used to transfer materials or batches of materials to be heat treated between different treatment zones or treatment chambers of the furnace **100.** For example, the furnace **100** may be a furnace having more than one hot zone **140** and the transport system **170** can encompass a collection of components that allow for the movement of a material to be treated from one hot zone to another. In another embodiment the furnace **100** may be a furnace having a hot zone and a cooling zone or a quenching chamber. In such case the transport system **170** can encompass a collection of components that allow movement of the material to be treated from the hot zone to the cooling zone or to the quenching chamber. For example, the transport system **170** may include a pusher, a belt, a roller, a moving hearth, a walking beam, or a combination thereof. Accordingly, the transport system **170** may include components 171, which may include a system for transporting a material or batches of materials from one hot zone to another or to a quenching chamber after heat treatment in the hot zone.

The system may include an atmospheric monitoring system **180** that may be encompassed within the furnace **100** or may be placed proximate to the furnace **100.** Specifically, the atmospheric monitoring system **180** may include components **181,** which may include an air conditioning unit, a thermometer, a barometer, and a hygrometer, for example. The atmospheric monitoring system **180** may both monitor the atmospheric conditions surrounding the furnace **100** and modify those conditions by employing one or more of the atmospheric monitoring system components **181** within the system **180.** The atmospheric monitoring system **180** may also include a weather station.

The system 1 may also include a number of sensors **200** that may be in communication with or otherwise connected to one or more furnace components. The sensors **200** may sense a parameter that is associated with the operation of a corresponding furnace component. Sensing parameters that are associated with the operation of a furnace component include both receiving data generated by the furnace components and monitoring the activity or function of the furnace components. The sensors **200** may generate sensor data or sensor signals that are representative of a parameter that is associated with the operation of one or more furnace components. The generated sensor signals or sensor data may include analog or digital signals that are representative of a measured parameter from one of the sensors **200.** The data signals can contain raw data, but may also contain calibrated and/or filtered data.

The sensors **200** of the invention may be communicatively coupled to one or more of the furnace components. The terms "communication" and "communicatively coupled" are defined herein, unless more specifically indicated (e.g, electrical communication, chemical communication, electrochemical communication), as a general state in which two or more components of the system **1** (e.g., one of the sensors **200** and a furnace component) are connected such that communication signals are able to be exchanged (directly or indirectly) between the components on a unidirectional or bidirectional (or multi-directional) manner, either wirelessly, through a wired connection, or a combination of both as would be understood by a person having ordinary skill in the art.

The system **1** may include a variety of sensors **200** that are communicatively coupled to a furnace component including, for example, a door wall temperature sensor, a roughing pump oil temperature sensor, a holding pump oil temperature sensor, a blower vibration sensor, a blower amperage sensor, a dew point measurement sensor, a power feed through water temperature sensor (i.e., a temperature sensor, such as a thermocouple, positioned in a water stream exiting a power terminal of the furnace), a diffusion pump water temperature sensor, a differential pressure roughing pump sensor, a diffusion pump oil temperature sensor, a diffusion pump power meter sensor, a furnace ohm meter sensor, an arc detection sensor, a furnace voltage sensor, a pumping time to cross over sensor (i.e., a sensor, which includes a timer, that measures the time from the initiation of a pumping cycle to the time when pressure within the furnace crosses over a threshold pressure or level required to heat a part within the furnace), a furnace amperage sensor, a heating element resistance sensor, a heating power current sensor, a heating power voltage sensor, a vessel water temperature sensor, a front head water temperature sensor, a heat loss sensor, a pumping down time sensor, a leak-up rate sensor, a valve integrity sensor, a pump vibration sensor, a pressure drop heat exchanger sensor, a pump amperage sensor, a cooling water circuit outlet temperature sensor, an incoming water temperature sensor, a mechanical pump oil temperature sensor, a diffusion pump heating power sensor, a mechanical pump exhaust back pressure sensor, an ambient temperature sensor, an ambient humidity sensor, an ambient barometric pressure sensor, an inert gas supply dew point sensor, a furnace temperature sensor, a furnace pressure sensor, a vacuum level sensor, a heating element voltage sensor, a heating element amperage sensor, a furnace run status sensor (e.g., in cycle status, cycle hold status, out of cycle status), a mechanical pump run contractor sensor, a furnace heat enable contactor sensor, a resistance to ground sensor, an O-ring seal sensor, and/or an open-circuit detector sensor,

In certain embodiments, the system **1** may include a gas system component sensor **210,** a control system component sensor **220,** a cooling system component sensor **230,** a hot zone sensor **240,** a vacuum integrity system sensor **250,** a pumping system component sensor **260,** a transport system component sensor **270,** and/or an atmospheric monitoring system component sensor **280.**

The gas system sensor **210** may include, for example, a dew point sensor.

The control system sensor **220** may include, for example, a cold cathode sensor, a furnace active/inactive sensor (e.g., an on/off sensor), and/or a controller temperature sensor.

The cooling system sensor **230** may include, for example, a vibration sensor (e.g., a blower vibration sensor) and a blower amperage sensor. The vibration sensor may be used to avoid a major breakdown of the cooling system components because the magnitude and/or frequency of vibration present in the system indicates the severity of the problem causing the vibration

The hot zone sensor **240** may include, for example, a resistance to ground sensor, an arc detection sensor, a heating element resistance sensor, a heating power current sensor, a heating power voltage sensor, a vessel water temperature sensor, a front head water temperature sensor, a furnace temperature sensor, an open circuit sensor, and/or a power feed through water temperature sensor. Resistance to ground sensors indicate hot zone cleanliness, which can be used to prevent arcing at the heating element that could result in heating element damage. Open circuit sensors may be used to indicate uniformity of heating and provide an indication that the heating elements are connected. The power feed through water temperature sensors provide temperature data that may be utilized to avoid seal damage.

The vacuum integrity sensor **250** may include a pressure sensor and/or a leak sensor. More specifically, the vacuum integrity sensor **250** may include a pumping time to crossover sensor and/or a leak up rate sensor. The pumping time to cross over sensor and leak up rate sensor may be used to detect a leak in a pressure vessel at the vacuum integrity system **150** of furnace **100** and may also be used to monitor pumping performance. Additionally, the pumping time to cross over sensor and leak up rate sensor may be monitored during a treatment to prevent discoloration in a part subjected to heat treatment.

The pumping system sensor **260** may include, for example, an oil temperature sensor, a power sensor, a pressure sensor, and/or a water temperature sensor. More specifically, the pumping system sensor **260** may include a roughing pump sensor, vacuum booster sensor, diffusion pump sensor, and/or a holding pump sensor. The vacuum booster sensors may be selected from the group consisting of a run time sensor, a temperature sensor, a pressure sensor, and a combination thereof. The roughing pump sensors may be selected from the group consisting of a run time sensor, a temperature sensor (eg, an oil temperature sensor), a pressure sensor (e.g., an exhaust pressure sensor), and a combination thereof. The diffusion pump sensors may be selected from the group consisting of a run time sensor, a temperature sensor (e.g., an oil temperature sensor, a water in temperature sensor, and a water out temperature sensor), a heating power usage temperature sensor, and a combination thereof. The holding pump sensors may be selected from the group consisting of a run time sensor, a temperature sensor (e.g., oil temperature sensor), a pressure sensor, and a combination thereof.

The transport system sensor **270** may include, for example a material location sensor and/or a status sensor. The material location sensor may be used to detect the presence of a batch of material in the furnace **100** where the material may be moved from one portion (e.g., hot zone) of the furnace to another with a pusher mechanism, a belt mechanism, a roller mechanism, a moving hearth mechanism, a walking beam mechanism, or a combination thereof. The status sensor may be used to indicate a status of the transport system and, more specifically, an operation status (e.g., a status indicating that a mechanism of system **170** is operating normally or has a fault) of the components being used to transport a material to be subjected to heat treatment from one portion of the furnace **100** to another.

The atmospheric system sensor **280** may include, for example, an ambient temperature sensor, an ambient pressure sensor, and/or an ambient humidity sensor.

In certain preferred embodiments of the invention, the furnace **100** is a vacuum furnace and the system **100** includes one or more of a pump sensor, a hot zone sensor, a vacuum sensor, a cooling system sensor, and an atmosphere sensor.

The sensors **200** may be communicatively coupled to a sensor data receiver **300.** The sensor data receiver can be a data logger. As used herein, the term "data logger" may refer to either a separate data-logging device (e.g., a digital data recorder) or a data logging function performed by one or more hardware or software components of a local terminal **400** or remote server **500.** The sensor data receiver **300** may be a hardware system that sensors **200** are connected to and may aggregate sensor data received from said sensors. In one embodiment the sensor data receiver **300** may store the data on a non-transitory storage medium as described herein and/or known by persons skilled in the art. Where any one of the sensors **200** provides data in an analog signal format (e.g., voltage, amperage), the sensor data receiver **300** may convert such analog data to a digital signal format with one or more A/D converters.

The sensor data receiver **300** may be communicatively coupled to an on-site computer system such as local terminal **400.** In certain alternative embodiments, the sensor data receiver **300** may be omitted and the sensors **200** may be connected directly to the local terminal **400** where an input/output component of the local terminal **400** is programmed to function as the sensor data receiver **300.**

The local terminal **400** may be placed proximate to the furnace **100.** For example, the local terminal **400** may be physically mounted on the furnace **100.** Alternatively, the local terminal **400** may be provided in a separate housing that is in the vicinity of the furnace **100** (e.g., within the same room as furnace **100**)**.**

The local terminal **400** may include, for example, a user interface **410,** data reader **430,** and/or a data transmitter **440.** In alternative embodiments, the local terminal **400** may also include a furnace controller **420,**

The data reader **430** may be a processor having one or more ports that allow for the reception of sensor data from the sensor data receiver **300.** Alternatively, the data reader **430** may have circuitry and one or more ports that allow for the reception of sensor data directly or indirectly from one or more of the sensors **200.** In certain aspects, the data reader **430** may be a software component of the local terminal **400** that may collect and aggregate data received from sensor data receiver **300.** The data reader **430** may also include an embedded event processing (EP) system. As used herein, the term "event processing system" refers to a computerized system that is configured to: track and analyze data from one or more of sensors **200** and derive a conclusion based on such analyzed data. The embedded EP system may be a complex event processing (CEP) system. In preferred embodiments, the embedded EP system is a small footprint complex event processor that runs certain business rules or maintenance routines based on component maintenance conditions, as described herein, to process sensor data and provide information (i.e., data reader output) that is indicative of a status of one or more of the furnace systems and components.

The data reader **430** may be connected and communicatively coupled to the user interface **410,** and the data transmitter **440.** Specifically, the data reader **430** may process the sensor data received from the sensor data receiver **300** and may then display raw data and/or processed data from the sensors at the user interface **410.** The data reader **430** may also transmit raw sensor data or processed sensor data through the data transmitter **440** to a remote server **500.** The data reader **430** may operate in conjunction with the data transmitter **440** to be responsive to a furnace failure event-driven request, the request being generated either automatically or due to a user command, to transmit raw or processed sensor data to the remote server **500.** For example, the furnace failure event may require a powering down of a heating element due to arcing. The information regarding furnace failure event (i.e., arcing) could be sent to to a remote server **500** and a failure event-driven request could be provided automatically by the remote server **500,** instructing a user to power down the heating element of the subject furnace. In alternative embodiments where the local terminal **400** includes a furnace controller **420,** the data reader **430** may be connected and communicatively coupled to the furnace controller **420.** For example, the data reader **430** may process the sensor data and vary or modify a parameter of the furnace **100** through the furnace controller **420** either automatically or in response to a user input at the user interface **410.**

The user interface **410** may be a graphical user interface that allows a user to (1) view raw sensor data or processed sensor data from the data reader **430** (2) submit instructions to the furnace regarding the operation of the furnace or, more specifically, the operation of one or more furnace components; (3) visualize information, instructions, and/or software received at the local terminal **400** from the remote server **500;** (4) provide instructions to the data reader **430** regarding business rules to be used for the evaluation of sensor data; and (5) communicate with a third party technician regarding the status or maintenance of the furnace **100.** Preferably, the user interface **410** includes a real time dashboard that allows a user to interact with the system of the invention and view and interpret sensor data in real time.

More broadly, the user interface **410** may include at least one of textual, graphical, audio, video, animation, and/or haptic elements. A textual element may be provided, for example, by a printer, monitor, display, projector, etc. A graphical element may be provided, for example, through a monitor, display, projector, and/or visual indication device, such as a light, flag, beacon, etc. An audio element may be provided, for example, through a speaker, microphone, and/or other sound generating and/or receiving device. A video element or animation element may be provided, for example, through a monitor, display, projector, and/or other visual device. A haptic element may be provided, for example, via a very low frequency speaker, vibrator, tactile stimulator, tactile pad, simulator, keyboard, keypad, mouse, trackball, joystick, gamepad, wheel, touchpad, touch panel, pointing device, and/or other haptic device, etc.

In preferred aspects, the local terminal **400** includes a real-time dashboard at the user interface **410.**

The system 1 may include a remote server **500** that is communicatively coupled to the local terminal **400.** In certain embodiments, the remote server **500** may be connected to the data transmitter **440** and the user interface **410.** The remote server **500** may include one or more processors and non-transitory storage media. The remote server **500** may include one or more transceivers having circuitry configured to receive raw or processed sensor data from the data transmitter **440.** In addition, the one or more transceivers of the remote server **500** may have circuitry configured to transmit remote data to the user interface **410,** which may be processed by the data reader **430.** For example, the remote server **500** may store historical sensor data and transmit such historical sensor data to the local terminal **400** for processing by the data reader **430.**

The remote server **500** may also be communicatively coupled to the local terminal **400** through the internet as would be understood by a person having ordinary skill in the art. For instance, the transceivers of the remote server **500** may include one or more network adapters configured to transmit and receive data via the internet. The remote server **500** may also be a cloud computing system. As used herein, the term "cloud computing system" may refer to a computing platform or system where a user may have access to applications or stored data or other computing resources necessary to the system **1** over a network.

In certain aspects, at least one of the local terminal **400** and remote server 500 may be programmed to perform a predictive maintenance routine or predictive processing methodology, as described herein, through the data reader **430** upon receipt of sensor data from the various component sensors **200.**

The system **1** may also include a remote user interface **600** that may be accessible through the internet and which is communicatively coupled to the remote server **500,** The remote user interface **600** may include a real time dashboard that allows a remote user to access raw or processed sensor data from the furnace **100** and to communicate with the local terminal **400.**

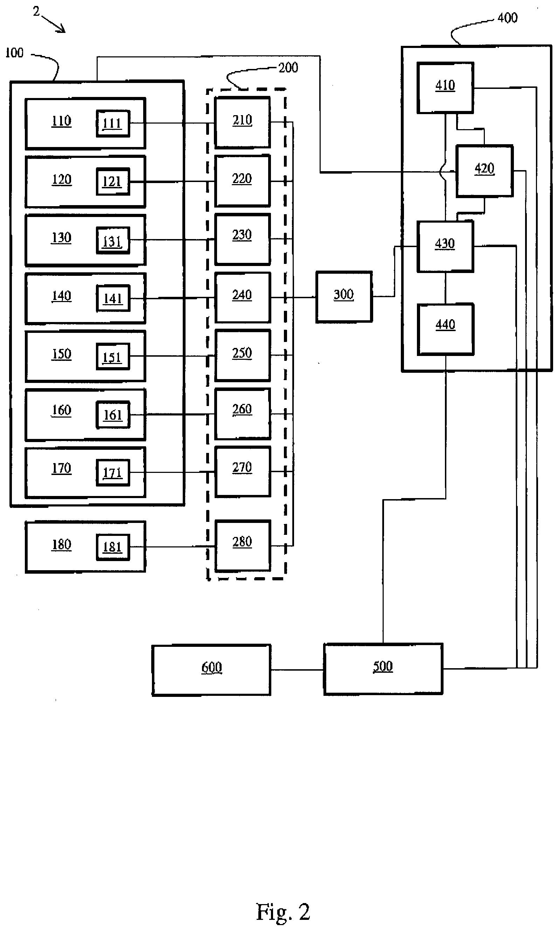

In an alternative embodiment of the invention described in Fig. 2, system **2** provides for the remote server **500** to be communicatively coupled directly to the user interface **410,** the furnace controller **420,** the data reader **430,** and the data transmitter **440.** In this embodiment, the remoter server **500** may transmit data to the user interface **410** and the data reader **430.** In contrast to system **1,** system **2** may include a remoter server **500** that may transmit instructions to a furnace controller **420** to directly control an operation of the furnace **100.** For example, the remote server 500 may be configured to receive processed sensor data from the data reader **430** through the data transmitter **440** that indicates a present failure condition in the furnace **100.** Upon receipt of such transmission, either a user at the remote interface 600 or the remote server **500** may transmit instructions to the furnace controller **420** to deactivate or "turn off" the furnace **100,** or a component therein, through the control system **120** to prevent damage to the furnace **100.**

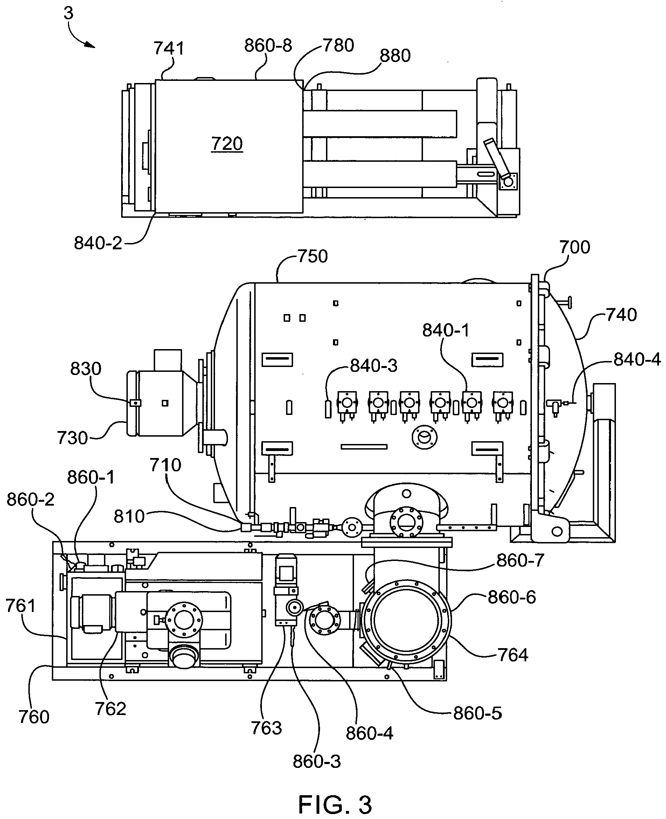

Fig. 3 discloses an exemplary furnace maintenance system **3** that describes a layout of sensors on a vacuum furnace **700.** The system **3** includes a gas system **710,** a control system **720,** a cooling system **730,** a hot zone **740,** a pressure vessel **750** (i.e., the vacuum integrity system), a pumping system **760,** and an atmospheric monitoring system **780.** The hot zone **740** includes a set of heating element resistance instruments **741.** The pumping system **760** includes a roughing pump **761,** a booster pump **762,** a holding pump **763,** and a diffusion pump **764.**

Various sensors are provided in system **3,** which are placed at selected furnace components. For example, the gas system **710** includes a backfill gas dew point sensor **810.** The cooling system **730** includes a gas blower motor vibration sensor **830.** The hot zone **740** includes six power feed water temperature sensors **840-1,** heating power current and voltage sensors **840-2,** a vessel water temperature sensor **840-3,** and a front head water temperature sensor **840-4.** The pumping system **760** includes a roughing pump exhaust pressure sensor **860-1,** a roughing pump oil temperature sensor **860-2,** a holding pump oil temperature sensor **860-3,** a diffusion pump water outlet temperature sensor **860-4,** a diffusion pump water inlet temperature sensor **860-5,** a diffusion pump power monitor **860-6,** a diffusion pump oil temperature sensor **860-7,** and pump hour meters **860-8.** The atmospheric monitoring system **780** includes temperature and humidity sensors **880.**

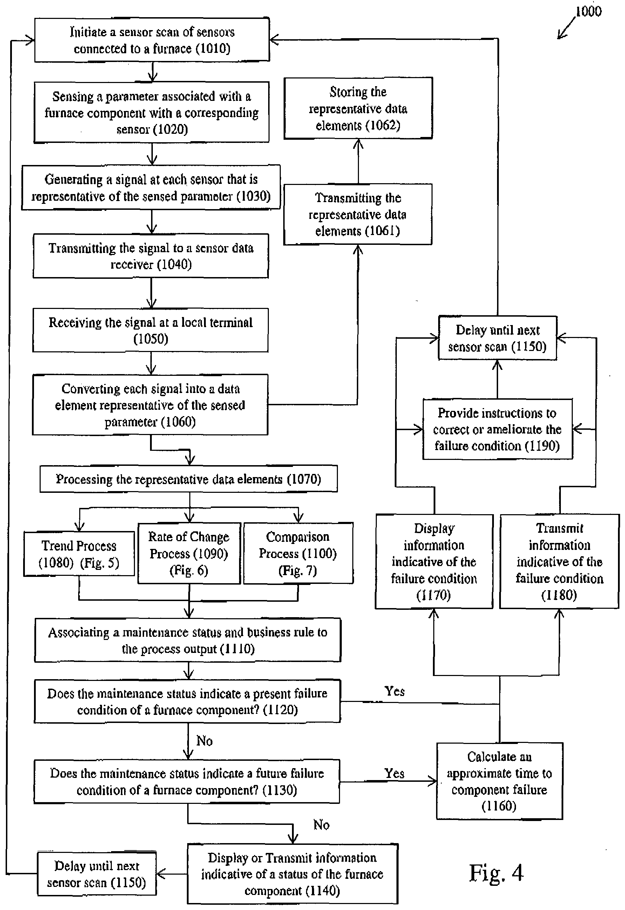

Figs. 4 to 7 illustrate methods of maintaining furnace **100** using a furnace maintenance system according to the present invention, such as exemplary systems 1 and **2**

For example, the present invention includes method **1000** for (1) automatically determining whether a furnace component requires maintenance because of a present failure condition; and/or (2) automatically determining whether a furnace component will require maintenance because of an expected failure condition.

An exemplary method of the invention **1000** is set forth in Fig 4 and begins at step **1010** with an initiation of a scan of sensors (i.e., sensors **200)** that are connected to the furnace **100** or, more particularly, the various components of the furnace. The scan may be initiated at local terminal **400** or may be initiated by remote server **500** Alternatively, the sensor scan (step **1010)** may be initiated at sensor data receiver **300,** which may then proceed to monitor or otherwise read the sensor values for component sensors **200** at a scan interval, as described herein.

A preliminary step of the methods of the invention may be the placement of a plurality of sensors **200** at the furnace **100.**

Moreover, the sensor scan (step **1010)** may be initiated automatically as a programmed and scheduled scan. For example, the scan may occur on the order of seconds, minutes, or hours. Indeed, the initiation of a scan of the sensors **200** may occur on a scan interval which may vary from about 1 to 59 seconds, 1 to 59 minutes, or 1 to 24 hours. In certain preferred aspects of the invention, a scan may occur more frequently for critical components as compared to non-critical components. For example, critical component sensors may be scanned at 1 second intervals while non-critical component sensors may be scanned at 30 minute intervals.

Critical component sensors may be selected from the group consisting of hot zone component sensors, vacuum integrity component sensors, pumping system component sensors, cooling system component sensors, and a combination thereof. Non-Critical component sensors may be selected from the group consisting of gas system component sensors, transport system component sensors, atmospheric system component sensors, control system component sensors, and a combination thereof.

After the initiation of the sensor scan (step **1010**)**,** the sensors may sense a parameter associated with a furnace component (step **1020**) and proceed to generate a signal that is representative of the sensed parameter (step **1030**)**.** The signal generated by each respective sensor may be an analog signal or a digital signal. The signal, which is representative of the sensed furnace parameter, may then be transmitted to a sensor data receiver **300** either automatically, upon a user request, or at a scan interval, as described herein (step **1040**)**.**

After receiving the signal at the sensor data receiver (step **1040**)**,** the sensor data receiver may process the signal by, for example, converting the signal to a digital signal where the signal from the sensor is an analog signal. Additionally, the sensor data receiver may store the signal data on a non-transitory storage medium. The sensor data receiver **300** may further transmit the signal from the component sensors (either in its raw or processed form) for receipt by a local terminal (step **1050**)**.** Indeed, the signal, which is representative of a sensed furnace parameter, may then be transmitted to the local terminal either automatically, upon a user request, or at a scan interval, as described herein. In certain preferred aspects of the invention, the signal data from the sensor data receiver **300** is received by a data reader **430** of the local terminal **400** for further processing and analysis.

Upon reception at the local terminal **400,** the signal data from each component sensor (either in its raw or processed form) may then be converted at the local terminal into a data element representative of the sensed furnace parameter (step **1060**)**.** Converting the signal data to representative data elements may include, for example, (1) associating the identity of the sensed furnace component with the signal data; (2) translating the signal data into a selected unit of measurement that may be selected from the group consisting of degrees Fahrenheit, degrees Celsius, Kelvin, amperes, volts, ohms, watts, bar, pascal, torr, mmHg, and atmospheres; and/or (3) converting the signal data to what may amount to an "on/off" parameter or a "connected/disconnected" parameter (e.g., the signal data indicates an open circuit, an arcing heating element, etc.). In certain aspects, method step **1060** may be performed at a data reader **430,** however, in alternative embodiments, method step **1060** may be performed remotely at a remote server **500.**

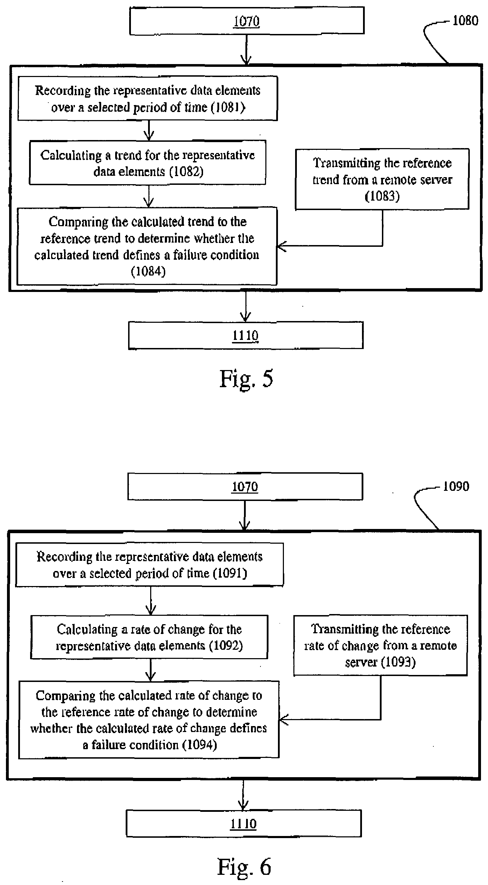

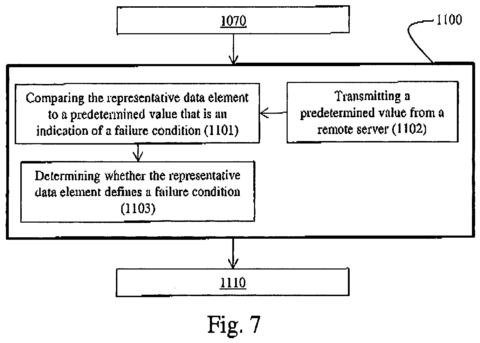

The resulting representative data elements may then be processed (step **1070**) according to a predictive processing methodology that can indicate (1) the existence of a present failure condition in a furnace component; and/or (2) that a furnace component is expected to fail. The predictive processing methodologies of the invention utilize historical data that is indicative of a present failure condition or an expected failure condition for a furnace component such that when a representative data element substantially matches or otherwise corresponds to the historical data, a user may expect the present failure condition to exist or the expected failure condition to occur with a reasonable degree of certainty. As used herein, the term "substantially match" may refer to a comparison of two or more data elements (e.g., values, trends, slopes, functions, rates, and the like) where the two or more data elements are within an acceptable range In certain embodiments, two or more data elements may be substantially matched when they are within 30% of each other. More preferably, two or more data elements may be substantially matched when they are within 20 % of each other. Most preferably, two or more data elements may be substantially matched when they are within 10 % of each other. The predictive processing methodologies of the invention may include a trend process (step **1080**) (Fig. 5), a rate of change process (step 1090) (Fig. 6), and a predetermined value comparison process (step **1100**) (Fig. 7).

As shown in Fig. 5, the trend process (step **1080**) may include the steps of recording or storing the representative data elements at the local terminal **400** or the remote server **500** for a selected or predetermined period of time (step **1081**)**.** The selected period of time may be an interval of about 1 to 59 seconds, 1 to 59 minutes, 1 to 23 hours, 1 to 6 days, or 1 to 4 weeks. Based on the selected period and the recorded representative data elements, the method may include calculating a trend for the representative data elements, which may be plotted graphically (step **1082).** A reference trend, based on the historical data, may be transmitted from a remote server **500** to the local terminal **400,** wherein the reference trend is indicative of a present or future failure condition for a furnace component (step **1083).** Alternatively, the calculated trend data may be transmitted to the remote server **500** for processing. The calculated trend may then be compared to the reference trend to determine whether the calculated trend substantially matches the reference trend such that a user may expect the present failure condition to exist or the expected failure condition to occur with a reasonable degree of certainty (step **1084).**

As shown in Fig. 6, the rate of change process (step **1090)** may include the steps of recording or storing the representative data elements at the local terminal **400** or remote server **500** for a selected or predetermined period of time (step **1091).** The selected period of time may be an interval of about 1 to 59 seconds, 1 to 59 minutes, I to 23 hours, 1 to 6 days, or 1 to 4 weeks Based on the selected period and the recorded representative data elements, the method may include calculating a rate at which the representative data elements change, which may be plotted graphically (step **1092).** A reference rate of change, based on historical data, may be transmitted from a remote server **500** to the local terminal **400,** wherein the reference rate of change is indicative of a present or future failure condition for a furnace component (step **1093).** Alternatively, the calculated rate of change data may be transmitted to the remote server **500** for processing. The calculated rate of change may then be compared to the reference rate of change to determine whether the calculated rate of change substantially matches the reference rate of change such that a user may expect the present failure condition to exist or the expected failure condition to occur with a reasonable degree of certainty (step **1094).**

As shown in Fig. 7, the predetermined value comparison process (step **1100)** may include the steps of comparing at the local terminal **400** the representative data element to a predetermined value that is indicative of a present or future failure condition (step **1101),** where the predetermined value is transmitted from the remote server (step **1102).** Alternatively, the representative data element may be transmitted to the remote server **500** for processing and comparison to a predetermined value.

Based on the comparison between the representative data element and the predetermined value, a determination may be made as to whether the representative data element substantially matches the predetermined value such that a user may expect the present failure condition to exist or the expected failure condition to occur with a reasonable degree of certainty (step **1103**)**.**

Data from certain sensors **200** may be preferably processed by specific predictive processing methodologies. Representative data elements preferentially processed according to trend processes include, for example, pumping time to crossover data, leak up rate data, blower vibration data, resistance to ground data, power feed through water temperature data, pump oil temperature data, and heating power usage data. Representative data elements preferentially processed according to rate of change processes include, for example, arc detection data. Additionally, open circuit data is preferentially processed via a predetermined value comparison process.

After processing the representative data elements by one or more of the predictive processing methodologies (steps **1080, 1090,** and 1100), the resulting process output may be assigned a maintenance status (step 1110). As used herein, the term "maintenance status" refers to a status of the furnace component based on a representative data element that indicates whether the operability of the furnace component is satisfactory (i.e., no present or future failure condition detected), under caution (i.e., there is a risk that a present failure condition may exist or that a future failure condition may occur), and in danger (i.e., within a reasonable degree of certainty, a present failure condition exists or a future failure condition will occur). These maintenance statuses may also be assigned by applying a predetermined business rule, which may include a process for determining the maintenance status associated with a furnace component.

As used herein, the term "business rule" refers to an analytical guide that may be used to determine whether a certain maintenance status exists for a furnace or a furnace component. For example, a business rule for a certain sensor may encompass comparing sensor data from a furnace component sensor to a value (e.g., a reference value from historical data) where: (1) if the sensor data exceeds the value, the operability of the furnace component is satisfactory; (2) if the sensor data substantially matches the value, the operability of the furnace component is under caution; and (3) if the sensor data is less than the value, the operability of the furnace component is in danger. Persons having ordinary skill in the art may recognize, based on the present application, that a variety of business rules may be developed for different sensors and may include ranges, threshold values, maximum values, and/or minimum values.

The methods of the invention may also include providing a tag or indicator associated with each maintenance status through an associated user interface to a user, which allows the user to readily understand that a furnace component has a satisfactory maintenance status, an under caution maintenance status, or an in danger maintenance status. For the purposes of this invention, the satisfactory maintenance status has a "green" indicator, the under caution maintenance status has a "yellow" indicator, and the in danger maintenance status has a "red" indicator.

After preparing a maintenance status for each scanned furnace component, the method includes a determination of whether the maintenance status indicates a present failure condition and is either under caution (yellow) or in danger (red) (step **1120).** If the component is under caution or in danger, the systems of the invention may display such maintenance status information that is indicative of the failure condition at the user interface **410** of the local terminal (step **1170**)**.** Alternatively, such maintenance status information may also be sent to a remote server **500** and may be accessible via a remote user interface (step **1180**)**.**

If the maintenance status does not indicate a present failure condition, then the method may include a determination of whether the maintenance status indicates a future failure condition of a furnace component and is either under caution (yellow) or in danger (red) (step **1130).** The method may also include a calculation of an approximate time to component failure as compared to the historical data (step **1160).** Indeed, if there is future failure condition present, then the method may compare a representative data element related to the failing component to historical data that defines an approximate time to failure for similarly situated components.

If the component is under caution or in danger, then the systems of the invention may display such maintenance status information that is indicative of the failure condition, including the approximate time to failure, at the user interface **410** of the local terminal (step **1170**)**.** Alternatively, such maintenance status information may also be sent to a remote server **500** and may be accessible via a remote user interface (step **1180**)**.**

After displaying information indicative of a failure condition (step **1170**) and/or transmitting information indicative of a failure condition **(1180),** the method may also include providing instructions to correct or ameliorate the present or future failure condition (step **1190**)**.** Step **1190** may include (1) displaying corrective instructions at the user interface **410** of the local terminal **400,** which may, for example, be instructions stored at the local terminal **400** or transmitted to the local terminal **400** from a remote server **500;** and/or (2) providing commands to automatically correct or ameliorate the present or future failure condition, where local terminal **400** includes a furnace controller **420.** For example, upon detecting a failure condition, the local terminal **400** may automatically provide commands that direct the furnace **100** through a furnace controller **420** to take certain actions or perform a specific protocol (e.g., deactivate a component of the furnace **100).** Alternatively, upon detecting a failure condition, commands or instructions may be provided from a remote server **500** that direct the furnace **100** through a furnace controller **420** to take certain actions or perform a certain protocol (e.g., deactivate a components of the furnace **100).**

After one or more of displaying information (step **1170),** transmitting information (step **1180),** and providing instructions (step **1190),** the method may include a delay period before returning to step **1010** and initiating another sensor scan. The delay period may include a delay interval of about 1 to 59 seconds, a 1 to 59 minutes, or 1 to 24 hours.

If the maintenance status indicates that a furnace component is operating satisfactorily (green), the method may include displaying such information indicative of the maintenance status at the user interface **410** of the local terminal 400 and/or transmitting the maintenance status information to a remote server (step **1140).** The method may also include a delay period before returning to step **1010** and initiating another sensor scan. The delay period may include a delay interval of about 1 to 59 seconds, 1 to 59 minutes, or 1 to 24 hours.

An exemplary table describing certain component sensors **200** and their associated maintenance statuses, business rules, and resulting instructions based upon such maintenance status are provided in Table 1.

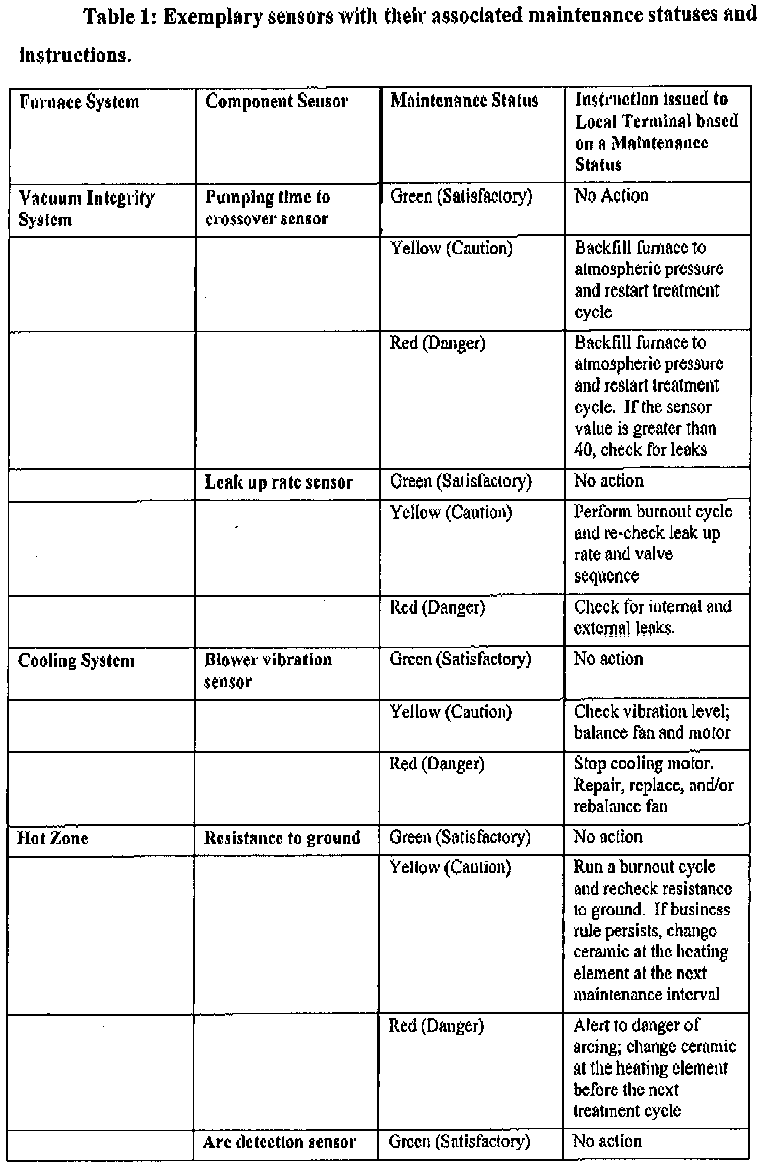

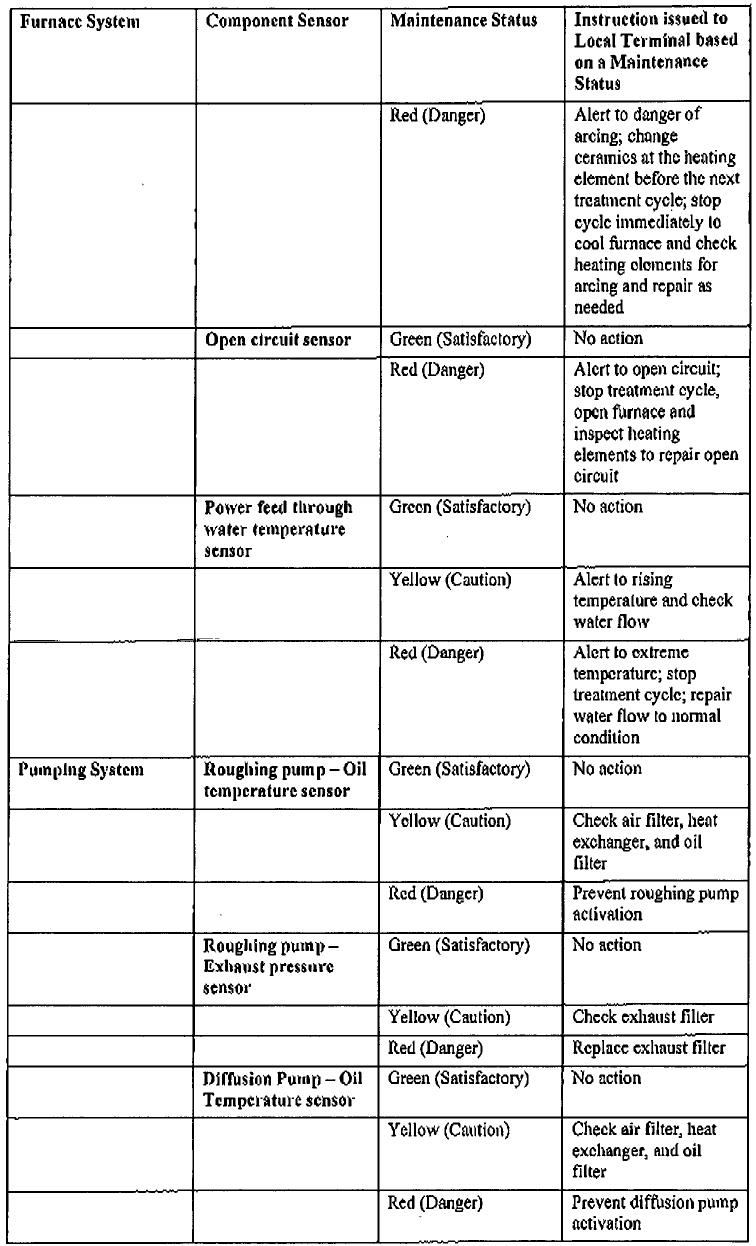

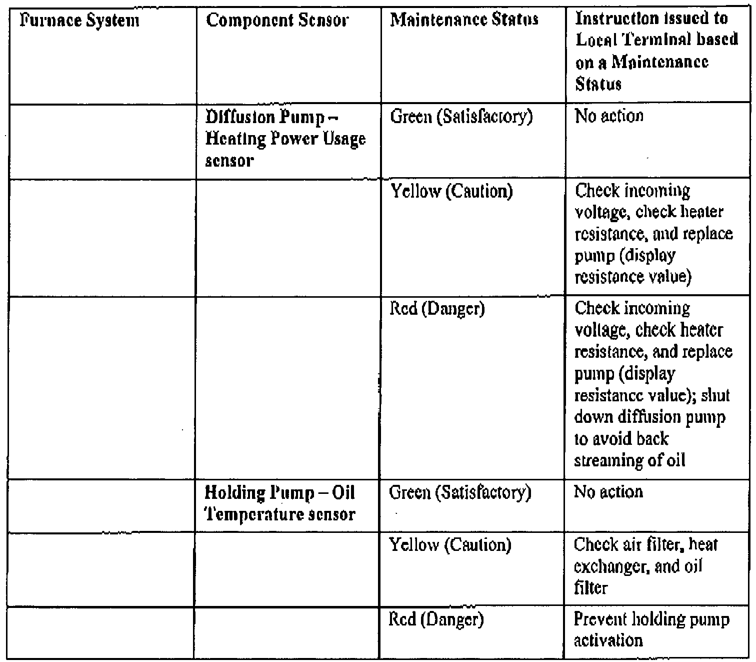

In another embodiment of the invention, the method may include scanning the sensors **200** associated with one or more of furnace components selected from the group consisting of a hot zone system component, a vacuum integrity component, a pumping system component, and a cooling system component (Table 2). As set forth in Table 2, the specific method may include monitoring and measuring the representative data elements of certain components and, upon finding a present or future failure condition, providing an auto-diagnostic instruction. The auto-diagnostic instruction may be displayed to a user at the user interface **410** (e.g., real time dashboard) or, in alternative embodiments, provided to the furnace **100** automatically from a furnace controller **420.**

**Table 2: Exemplary Furnace Maintenance Process**

| **Furnace System** | **Measurement and Monitoring** | **Auto**-**Diagnostic Provided** |
|---|---|---|
| Hot Zone System | • Heating element Resistance | Replace heating element |
| | • Heat loss | |
| Vacuum Integrity System | • Pumping down time | Run Burn-out cycle |
| | • Leak up rate | |
| | • Valve troubleshooting | |
| Pumping System | • Pump amperage | Display indication that it is time for furnace maintenance |
| | • Pump oil | |
| | • Pump Vibration | |
| | • Pump Temperature | |
| Cooling System | • Blower amperage | Replace bearings |
| | • Pressure drop heat exchanger | |

The methods of the invention may be embodied, unless more specifically indicated, as a computer implemented process or processes and/or apparatus for performing such computer-implemented process or processes as described herein, and can also be embodied in the form of a tangible storage medium containing a computer program or other machine-readable instructions (i.e., "computer program"), wherein when the computer program is loaded into a computer or other processor and/or is executed by the computer, the computer becomes an apparatus for executing the process or processes. Storage media for containing such computer program include, for example, floppy disks and diskettes, compact disk (CD)-ROMs (whether or not writeable), DVD digital disks, RAM and ROM memories, computer hard drives and back-up drives, external hard drives, "thumb" drives, and any other storage medium readable by a computer. The process or processes can also be embodied in the form of a computer program, for example, whether stored in a storage medium or transmitted over a transmission medium such as electrical conductors, fiber optics or other light conductors, or by electromagnetic radiation, wherein when the computer program is loaded into a computer and/or is executed by the computer, the computer becomes an apparatus for practicing the process or processes. The process or processes may be implemented on a general purpose microprocessor or on a digital processor specifically configured to practice the process or processes. When a general-purpose microprocessor is employed, the computer program code configures the circuitry of the microprocessor to create specific logic circuit arrangements. Storage medium readable by a computer includes a medium that is readable by a computer per se or by another machine that reads the computer instructions for providing those instructions to a computer for controlling its operation. Such machines may include, for example, a punched card reader, a magnetic tape reader, a magnetic card reader, a memory card reader, an optical scanner, as well as machines for reading the storage media mentioned above.

A number of patent and non-patent publications may be cited herein in order to describe the state of the art to which this invention pertains. The entire disclosure of each of these publications is incorporated by reference herein.

While certain embodiments of the present invention have been described and/or exemplified above, various other embodiments will be apparent to those skilled in the art from the foregoing disclosure. The present invention is, therefore, not limited to the particular embodiments described and/or exemplified, but is capable of considerable variation and modification without departure from the scope and spirit of the appended claims.

Moreover, as used herein, the term "about" means that dimensions, sizes, formulations, parameters, shapes and other quantities and characteristics are not and need not be exact, but may be approximate and/or larger or smaller, as desired, reflecting tolerances, conversion factors, rounding off, measurement error and the like, and other factors known to those of skill in the art. In general, a dimension, size, formulation, parameter, shape or other quantity or characteristic is "about" or "approximate" whether or not expressly stated to be such. It is noted that embodiments of very different sizes, shapes and dimensions may employ the described arrangements.

Furthermore, the transitional terms "comprising", "consisting essentially of and "consisting of", when used in the appended claims, in original and amended form, define the claim scope with respect to what unrecited additional claim elements or steps, if any, are excluded from the scope of the claim(s). The term "comprising" is intended to be inclusive or open-ended and does not exclude any additional, unrecited element, method, step or material. The term "consisting of" excludes any element, step or material other than those specified in the claim and, in the latter instance, impurities ordinary associated with the specified material(s). The term "consisting essentially of" limits the scope of a claim to the specified elements, steps or material(s) and those that do not materially affect the basic and novel characteristic(s) of the claimed invention. All devices, systems, and methods described herein that embody the present invention can, in alternate embodiments, be more specifically defined by any of the transitional terms "comprising," "consisting essentially of," and "consisting of."

## Claims

1. A system for facilitating the maintenance of an industrial heat treating furnace, the system comprising.
a. a plurality of sensors connected to a corresponding plurality of furnace components in an industrial heat treating furnace, each of the sensors being configured to sense a parameter associated with operation of one of the furnace components and to generate a signal that is representative of the sensed parameter; and
b. a computing system connected to receive the signals from the plurality of sensors, the computing system being programmed to:
(i) convert the signals from the sensors into a plurality of data elements;
(ii) select representative data elements from each of the plurality of data elements, the representative data elements being indicative of the parameter sensed by one of the sensors;
(iii) analyze the representative data elements using at least one of a trend process, a rate of change process, and a predetermined value comparison process, to determine whether one or more of the furnace components requires maintenance or will require maintenance, and then
(iv) display information indicative of a status of one or more of the furnace components based on the analysis of the representative data elements;
wherein the trend process comprises comparing the representative data elements over a period of time and determining whether the representative data elements define a trend that indicates a failure condition associated with one or more of the furnace components as compared to a reference trend;
wherein the rate of change process comprises comparing the representative data elements over a period of time and determining whether a rate at which the representative data elements change in value indicates a failure condition associated with one or more of the furnace components as compared to a reference rate of change; and
wherein the predetermined value comparison process comprises comparing the representative data elements to one or more predetermined values indicative of a failure condition and determining whether the representative value indicates a failure condition associated with one or more of the furnace components as compared to the one or more predetermined values.

2. The system of claim 1, wherein the plurality of sensors comprises a pump sensor, a hot zone sensor, a control system sensor, a vacuum sensor, a cooling system sensor, a transport system sensor, and an atmosphere sensor.

3. The system of claim 2, wherein the pump sensor is selected from the group consisting of a roughing pump sensor, booster pump sensor, diffusion pump sensor, holding pump sensor, and a combination thereof.

4. The system of claim 2, wherein the pump sensor comprises an oil temperature sensor, a power sensor, a pressure sensor, a water temperature sensor, or a combination thereof.

5. The system of claim 2, wherein the hot zone sensor is selected from the group consisting of an arc detection sensor, a heating element resistance sensor, a heating power current sensor, a heating power voltage sensor, a vessel water temperature sensor, a front head water temperature sensor, a furnace temperature sensor, a resistance to ground sensor, an open circuit sensor, and a combination thereof.

6. The system of claim 2, wherein the vacuum sensor is selected from the group consisting of a pressure sensor, a leak sensor, and a combination thereof.

7. The system of claim 2, wherein the cooling system sensor is a vibration sensor.

8. The system of claim 2, wherein the atmosphere sensor is selected from the group consisting of an ambient temperature sensor, an ambient pressure sensor, an ambient humidity sensor, and a combination thereof.

9. The system of claim 1, wherein the furnace is an atmosphere furnace or a vacuum furnace.

10. The system of claim 1, wherein the computer system is programmed to run an auto-diagnostic process that automatically processes the representative data elements using at least one of a trend process and a rate of change process to determine whether one or more of the furnace components requires maintenance or will require maintenance in the absence of a direct user command.

11. The system of claim 1, wherein the computing system comprises a local terminal, a remote server, or a combination thereof.

12. The system of claim 11, wherein the remote server comprises a physical server or a cloud-based computing system.

13. The system of claim 11 wherein the industrial heat treating furnace has a programmable logic controller and the local terminal is not connected to the programmable logic controller.

14. The system of claim 1, wherein the computing system comprises:
a. a local terminal configured to receive the signals from the plurality of sensors, monitor the signals from each sensor; convert the signals from each sensor into a plurality of data elements, and transmit the plurality of data elements; and
b. a remote server configured to receive the plurality of data elements transmitted from the local terminal, select representative data elements from the plurality of data elements, and analyze the representative data elements using at least one of the trend process and the rate of change process to determine whether one or more of the furnace components requires or will require maintenance.

15. The system of claim 14, wherein the computing system comprises a sensor data receiver connected to the local terminal and configured to receive the signals from the plurality of sensors and transmit the signals to the local terminal.

16. The system of claim 15, wherein the local terminal comprises a transceiver that is responsive to a failure event-driven request to transmit the plurality of date elements to the remote server.

17. The system of claim 14, wherein the remote server comprises a cloud-based computing system.

18. The system of claim 1, wherein the computing system is programmed to perform a predictive maintenance routine.

19. The system of claim 1, wherein the computing system is configured to report to a user whether one or more of the components of the furnace requires maintenance or will require maintenance.

20. The system of claim 1, wherein the computing system comprises a non-transitory data storage device configured to store at least one of the plurality of data elements and the representative data elements.

21. A method for automatically determining whether a component of a furnace requires maintenance because of a present failure condition and for automatically determining whether a component of the furnace will require maintenance because of an expected failure condition, the method comprising the steps of:
a. sensing parameters associated with operation of furnace components with a plurality of sensors connected to a corresponding plurality of furnace components;
b. generating signals that are representative of the sensed parameters with the plurality of sensors;
c. receiving the signals from each sensor at a computer system, and performing the following steps with the computer system:
i. converting the signals from each sensor into a plurality of data elements;
ii. selecting representative data elements from each of the plurality of data elements, the representative data elements being indicative of a parameter associated with operation of one or more of the furnace components;
iii. analyzing the representative data elements by using at least one of a trend process, a rate of change process, and a predetermined value comparison process to determine whether one or more of the furnace components requires maintenance or will require maintenance; and then
d. displaying information indicative of a status of one or more of the furnace components based on the analysis of the representative data elements.

22. The method according to Claim 21 wherein the step of analyzing the representative data elements using the trend process comprises the steps of:
(1) comparing the representative data elements over a period of time; and
(2) determining whether the representative data elements define a trend that indicates a failure condition of one or more of the furnace components as compared to a reference trend.

23. The method according to Claim 21 wherein the step of analyzing the representative data elements using the rate of change process comprises the steps of:
(1) comparing the representative data elements over a period of time; and
(2) determining whether a rate at which the representative data elements change in value indicates a failure condition of one or more of the furnace components as compared to a reference rate of change.

24. The method according to Claim 21 wherein the step of analyzing the representative data elements using the predetermined value comparison process comprises the steps of:
(1) comparing the representative data elements to a predetermined value indicative of a failure condition; and
(2) determining whether the representative data elements indicate a failure condition of one or more of the furnace components as compared to the predetermined value.

25. The method according to Claim 21 wherein the sensed parameters are selected from the group consisting of a hot-zone furnace parameter, a vacuum-integrity parameter, a pumping system parameter, a cooling system parameter, a transport system parameter, an atmosphere parameter, and a combination thereof.

26. The method according to Claim 21 wherein the step of displaying information indicative of a status of one or more of the corresponding components of the furnace comprises transmitting information indicative of a status of one or more of the furnace components to a real time dashboard.

27. The method according to Claim 21 further comprising the step of transmitting at least one of the plurality of data elements and the representative data elements to a remote server.

28. The method according to Claim 21 further comprising the step of storing at least one of the plurality of data elements and the representative data elements on a data storage device.

29. The method of Claim 22 comprising the step of receiving the reference trend from a remote server.

30. The method of Claim 23 comprising the step of receiving the reference rate of change from a remote server.

31. The method of Claim 24 comprising the step of receiving the predetermined value from a remote server.

32. The method of claim 31, comprising the step of providing instructions to the furnace based on the analysis of the representative data elements to backfill the furnace to atmospheric pressure and to perform a heating cycle.

33. The method of claim 31, comprising the step of providing instructions to the furnace based on the analysis of the representative data elements to perform a burnout cycle.

34. The method of claim 31, comprising the step of providing instructions to the furnace based on the analysis of the representative data elements to terminate a heating cycle.

35. The method of claim 31, comprising the step of providing instructions to the furnace based on the analysis of the representative data elements to perform a cooling cycle.

36. The method of claim 31, comprising the step of providing instructions to the furnace based on the analysis of the representative data elements to power down.

37. The method according to Claim 21 wherein the displaying step comprises providing instructions to a user based on the analysis of the representative data elements to check one or more sensors of the plurality of sensors.

38. The method according to Claim 21 wherein the displaying step comprises providing instructions to a user based on the analysis of the representative data elements to check one or more of the furnace components.
